# EUROPÄISCHE PATENTSCHRIFT

(11) **EP 1 320 482 B1**
(45) Veröffentlichungstag und Bekanntmachung des Hinweises auf die Patenterteilung: **01.12.2004**
(21) Anmeldenummer: 01969069.2
(22) Anmeldetag: 21.09.2001
(51) Int. Cl.: B62D 53/08, B60D 1/06

(54) **SATTELKUPPLUNG**
FIFTH WHEEL COUPLING
SELLETTE D'ATTELAGE

(30) Priorität: 27.09.2000 AT 16312000
(43) Veröffentlichungstag der Anmeldung: 25.06.2003
(73) Patentinhaber: Scharmüller, Josef, A-4870 Vöcklamarkt (AT)
(72) Erfinder: Scharmüller, Josef, A-4870 Vöcklamarkt (AT)
(74) Vertreter: Gibler, Ferdinand, Dipl.Ing. Dr.
(86) Internationale Anmeldenummer: PCT/AT2001/000297
(87) Internationale Veröffentlichungsnummer: WO 2002/026552

(56) Entgegenhaltungen:
- GB-A- 834 069
- US-A- 6 050 588

## Beschreibung

### Technisches Gebiet

Die Erfindung bezieht sich auf eine Sattelkupplung zur Verbindung von Sattelzugmaschine und Sattelanhänger eines Sattelzuges mit einer Kugelkupplung.

### Stand der Technik

Eine derartige Sattelkupplung ist beispielsweise aus der US 6 050 588 A bekannt, die allerdings mechanisch aufwendig gestaltet ist und bei der die Schwenkmöglichkeit zwischen Kupplungskugel und Kugelpfanne, durch den die Kupplungskugel umfassenden Niederhalter, begrenzt ist. Weitere bekannte Sattelkupplungen besitzen als Kupplungseinrichtung eine Kupplungsplatte mit einer Kupplungsöffnung und eine die Kupplungsöffnung verriegelnde Kupplungsklaue, wobei der Königszapfen des mit einer Gleitplatte auf der Kupplungsplatte aufliegenden Sattelanhängers in die Kupplungsöffnung eingreift und in Kupplungsstellung durch die Kupplungsklaue umschlossen wird. Diese Sattelkupplungen erlauben neben einer Schwenkbewegung des Sattelanhängers gegenüber der Sattelzugmaschine um eine Vertikalachse ein Verschwenken um eine Querachse bis etwa 10°, kaum aber ein Verschwenken um eine Längsachse, wodurch dem Sattelzug die Geländegängigkeit fehlt. Zur Verbesserung der Schwenkmöglichkeiten muß daher die Kupplungseinrichtung selbst am Zugmaschinenrahmen gelenkig abgestützt werden, was allerdings recht aufwendig und wartungsintensiv ist und hinsichtlich der Forderungen nach allseitig gleichen Schwenkbedingungen, von denen die Geländetauglichkeit des Sattelzuges abhängt, unbefriedigend bleibt.

### Darstellung der Erfindung

Der Erfindung liegt daher die Aufgabe zugrunde, eine Sattelkupplung der eingangs geschilderten Art zu schaffen, die bei vergleichsweise einfachem Aufbau beste Schwenkeigenschaften besitzt.

Die Erfindung löst diese Aufgabe durch die Verwendung einer Kugelkupplung mit Kupplungskugel und dazugehörendem Niederhalter einerseits und die Kupplungskugel in Kupplungsstellung umfassender Kugelpfanne und angeformtem Stielteil anderseits, wobei der Niederhalter in Verriegelungsstellung außen an der Kugelpfanne angreift, wobei der im Seitenbereich der Kugelpfanne angeformte Stielteil ein pfannenabgewandtes Befestigungsende bildet, und wobei im Scheitelbereich der Kugelpfanne ein Freiraum für ein Zusammenwirken von Kugelpfanne und Niederhalter freigelassen ist. Kugelkupplungen zeichnen sich gegenüber anderen Anhängekupplungen vor allem durch ihren geringen Konstruktionsaufwand und durch ihre relativ weiten Schwenkbereiche aus, welche Vorzüge durch den Einsatz einer Kugelkupplung als Sattelkupplung auch für die Verbindung von Sattelzugmaschine und Sattelanhänger rationell genutzt werden können, indem die Kupplungskugel zusammen mit dem zugehörigen Niederhalter als zugmaschinenseitige Kupplungseinrichtung dient und die Kugelpfanne mit ihrem Stielteil den Königszapfen bildet. Selbstverständlich lassen sich die Kupplungskugel und Kugelpfanne aber auch vertauschen, so daß dann die Kupplungskugel mit dem Niederhalter als anhängerseitiger Königszapfen und die Kugelpfanne mit dem Stielteil als zugmaschinenseitige Kupplungseinrichtung vorgesehen sind. Bei geöffnetem Niederhalter ist der Sattelanhänger ohne Schwierigkeiten an der Sattelzugmaschine an- oder von ihr abzukuppeln und in Kupplungsstellung verhindert der in seine Verriegelungsstellung eingeschwenkte bzw. eingeschobene Niederhalter ein ungewolltes Abheben von Kupplungskugel und Kugelpfanne. Das Zusammenwirken von Kupplungskugel und Kugelpfanne ermöglicht eine Schwenkbewegung des Anhängers gegenüber der Zugmaschine praktisch um jede beliebige Achse, so daß neben der üblichen Verschwenkbarkeit um eine Vertikalachse zum Manöverieren des Sattelzuges auch ein Verschwenken innerhalb recht großer Winkelbereiche um eine Querachse und vor allem auch um eine Längsachse gewährleistet ist. Die mit einer solchen Kugelkupplung ausgestatteten Sattelzüge sind daher voll geländegängig.

Eine zweckmäßige Konstruktion ergibt sich durch den im Seitenbereich der Kugelpfanne angeformten Stielteil, der ein pfannenabgewandtes Befestigungsende bildet, wobei im Scheitelbereich der Kugelpfanne ein Freiraum für ein Zusammenwirken von Kugelpfanne und Niederhalter freigelassen ist. Dieses Befestigungsende erlaubt einen geschickten und entsprechend belastbaren Anschluß der Kugelpfanne über den Stielteil am Rahmen od. dgl. des Sattelanhängers oder der Zugmaschine und der Freiraum im Scheitelbereich der Kugelpfanne verhindert eine ungewollte Einschränkung der Schwenkmöglichkeiten der Kugelpfanne gegenüber der Kupplungskugel. Diese Schwenkbewegung ist nämlich wegen der Zugehörigkeit des Niederhalters zur Kupplungskugel mit einer Relativbewegung der Kugelpfanne nicht nur gegenüber der Kupplungskugel, sondern auch gegenüber dem Niederhalter verbunden, so daß die Kugelpfanne mit ihrem Stielteil ein entsprechendes Bewegungsspiel gegenüber dem Niederhalter braucht, um die gewünschten Schwenkbereiche, insbesondere hinsichtlich einer Verschwenkbewegung um die Längs- und Querachsen, nicht zu beeinträchtigen.

Weist dabei das Befestigungsende des Stielteiles einen zur Kugelpfanne koaxialen Anschlußflansch und/oder Anschlußzapfen auf und ist zwischen Befestigungsende und Kugelpfanne ein Zwischenraum als Freiraum vorgesehen, ergeben sich günstige Belastungsverhältnisse bei der Aufnahme der Stütz- und Zugkräfte und die Kugelpfanne bildet mit ihrem geköpften Stielteil und dem Befestigungsende einen hochfesten, kompakten und leicht montierbaren Bauteil.

### Kurze Beschreibung der Zeichnungen

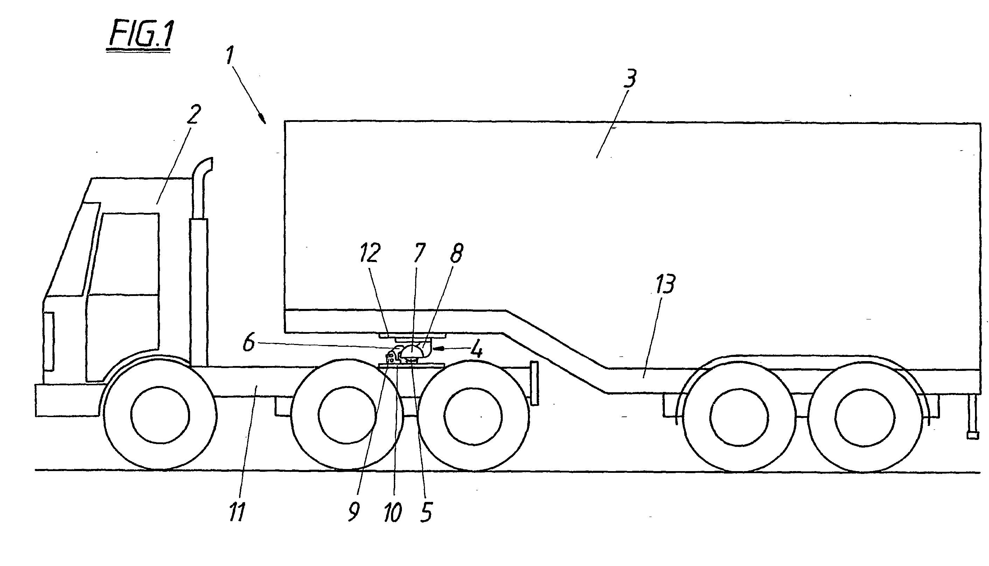

In der Zeichnung ist der Erfindungsgegenstand rein schematisch veranschaulicht, und zwar zeigen
- Fig. 1: einen mit einer erfindungsgemäßen Sattelkupplung ausgestatteten Sattelzug in Seitenansicht,
- Fig. 2: die wesentlichen Teile der erfindungsgemäßen Sattelkupplung in teilgeschnittener Seitenansicht und
- Fig. 3: die Kugelpfanne mit dem angeformten Stielteil der erfindungsgemäßen Sattelkupplung in einem Schaubild.

### Bester Weg zur Ausführung der Erfindung

Ein Sattelzug 1 aus Sattelzugmaschine 2 und Sattelanhänger 3 weist als Sattelkupplung zur Verbindung von Sattelzugmaschine 2 und Sattelanhänger 3 eine Kugelkupplung 4 mit einer Kupplungskugel 5 und einem zugehörigen Niederhalter 6 einerseits und einer Kugelpfanne 7 und einem angeformten Stielteil 8 anderseits auf. Die Kupplungskugel 5 und der sich schwenkverstellbar auf einem Lagerbock 9 abstützende Niederhalter sind über einen Kupplungsträger 10 am Fahrzeugrahmen 11 der Sattelzugmaschine 2 angeordnet und die Kugelpfanne 7 ist über ihren Stielteil 8 an einer Montageplatte 12 des Anhängerrahmens 13 befestigt. In der dargestellten Kupplungsstellung umfaßt die Kugelpfanne 7 die Kupplungskugel 5 von oben und wird in dieser Kupplungsstellung durch den eingeschwenkten Niederhalter 6 verriegelt, wobei der Niederhalter 6 über einen Lagerbolzen 14 um eine Horizontalachse verschwenkbar gelagert ist und über eine Stecksicherung 15 gesichert werden kann. Nach dem Lösen dieser Stecksicherung 15 und dem Zurückschwenken des Niederhalters 6 ist die Kugelkupplung 4 frei und der Sattelanhänger 3 läßt sich schwierigkeitslos von der Sattelzugmaschine 2 abkuppeln oder an diese ankuppeln.

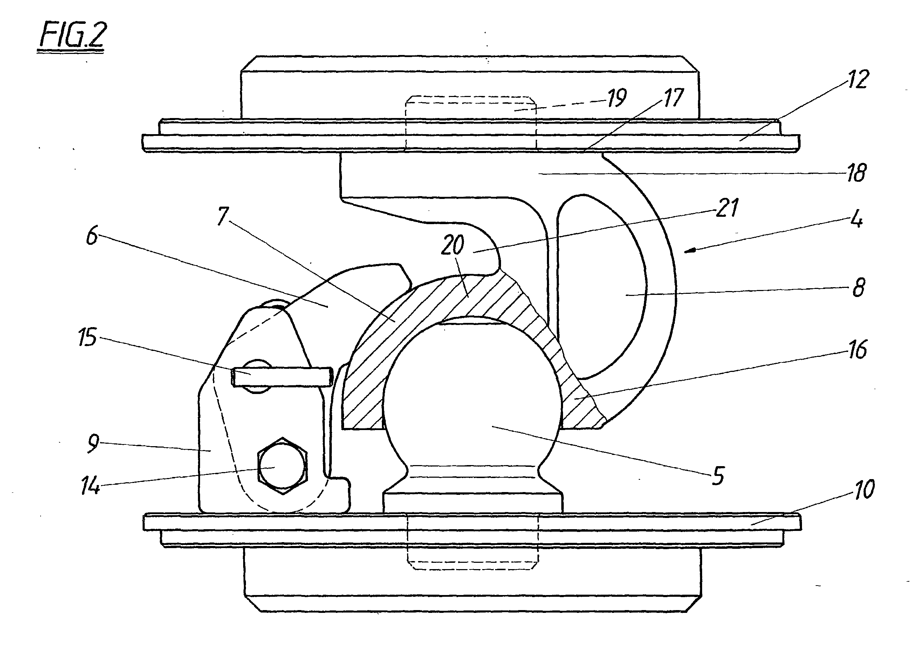

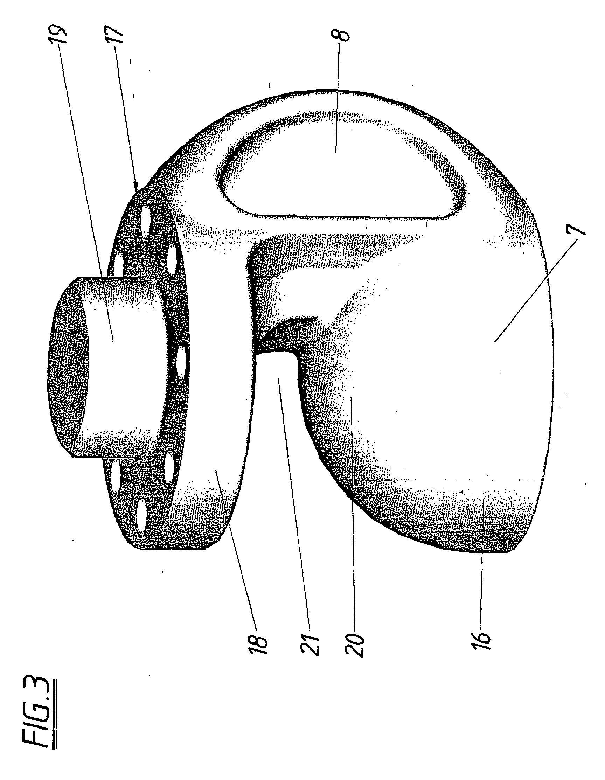

Wie insbesondere aus Fig. 2 und 3 hervorgeht, ist der Stielteil 8 im Seitenbereich 16 der Kugelpfanne 7 angeformt und bildet ein pfannenabgewandtes Befestigungsende 17, das einen zur Kugelpfanne 7 koaxialen Anschlußflansch 18 mit Anschlußzapfen 19 aufweist, welches Befestigungsende 17 einen einfachen, aber stabilen Anschluß der Kugelpfanne 7 an der Montageplatte 12 des Sattelanhängers 3 erlaubt. Zwischen dem Befestigungsende 17 und der Kugelpfanne 7 ist oberhalb deren Scheitelbereiches 20 ein Zwischenraum 21 als Freiraum für den Niederhalter 6 vorgesehen, so daß der in Verriegelungsstellung außen an der Kugelpfanne 7 angreifende Niederhalter 6 freies Bewegungsspiel relativ zur Kugelpfanne 7 und dem Stielteil 8 erhält und es zu keiner Beeinträchtigung des Schwenkbereiches der Kugelpfanne 7 gegenüber der Kupplungskugel 5 bei Schwenkbewegungen insbesondere um eine Längs- bzw. Querachse des Sattelzuges 1 kommt.

## Patentansprüche

1. Sattelkupplung (4) zur Verbindung von Sattelzugmaschine (2) und Sattelanhänger (3) eines Sattelzuges (1) mit einer Kugelkupplung (4), **gekennzeichnet durch** die Verwendung einer Kugelkupplung (4) mit Kupplungskugel (5) und dazugehörendem Niederhalter (6) einerseits und die Kupplungskugel (5) in Kupplungsstellung umfassender Kugelpfanne (7) und angeformten Stielteil (8) anderseits, wobei der Niederhalter (6) in Verriegelungsstellung außen an der Kugelpfanne (7) angreift, wobei der im Seitenbereich (16) der Kugelpfanne (7) angeformte Stielteil (8) ein pfannenabgewandtes Befestigungsende (17) bildet, und wobei im Scheitelbereich (20) der Kugelpfanne (7) ein Freiraum für ein Zusammenwirken von Kugelpfanne (7) und Niederhalter (6) freigelassen ist.

2. Sattelkupplung nach Anspruch 1, **dadurch gekennzeichnet, daß** das Befestigungsende (17) des Stielteiles (8) einen zur Kugelpfanne (7) koaxialen Anschlußflansch (18) und/oder Anschlußzapfen (19) aufweist und zwischen Befestigungsende (17) und Kugelpfanne (7) ein Zwischenraum (21) als Freiraum vorgesehen ist.

## Claims

1. A fifth wheel coupling (4) for coupling a semi-trailer tractor (2) and semi-trailer (3) of a semi-trailer unit (1) with a fifth wheel coupling (4), **characterized by** the use of a ball-shaped coupling (4) with a coupling ball (5) and an associated holding-down device (6) on the one hand, and a ball cup (7) enclosing the coupling ball (5) in the coupling position and attached stanchion part (8) on the other hand, with the holding-down device (6) acting in the locked position from the outside on the ball socket (7), with the stanchion part (8) which is attached in the lateral region (16) of the ball socket (7) forming a socket-averted fastening end (17), and with a cavity being left open in the apex region (20) of the ball socket (7) for the purpose of a cooperation between ball socket (7) and holding-down device (6).

2. A fifth wheel coupling as claimed in claim 1, **characterized in that** the fastening end (17) of the stanchion part (8) comprises a connecting flange (18) and/or connecting pin (19) and an intermediate space (21) is provided as a cavity between the fastening end (17) and the ball socket (7).

## Revendications

1. Sellette d'appui (4) destinée à relier un tracteur à sellette (2) et une semi-remorque (3) d'une remorque routière (1) par un attelage à rotule (4), **caractérisée par** l'utilisation d'un attelage à rotule (4) avec une rotule d'attelage (5) et un abaisseur (6) associé d'une part et avec un logement de rotule (7) comprenant la rotule d'attelage (5) en position d'attelage et une partie formant tige (8) venue de moulage d'autre part, l'abaisseur (6) étant appliqué de l'extérieur sur le logement de rotule (7) en position de verrouillage, la partie formant tige (8) venue de moulage avec la région latérale (16) du logement de rotule (7) formant une extrémité de fixation (17) détournée du logement et un espace libre étant ménagé dans la région du sommet (20) du logement de rotule (7) pour permettre la coopération entre le logement de rotule (7) et l'abaisseur (6).

2. Sellette d'appui selon la revendication 1, **caractérisée en ce que** l'extrémité de fixation (17) de la partie formant tige (8) comporte un collet de raccordement (18) disposé coaxialement par rapport au logement de rotule (7) et/ou un téton de raccordement (19) et qu'il est prévu, entre l'extrémité de fixation (17) et le logement de rotule (7), un écart(21) faisant office d'espace libre.
